Europäisches Patentamt

European Patent Office

Office européen des brevets

(11) Numéro de publication: **0 021 886**

**A1**

(12) **DEMANDE DE BREVET EUROPEEN**

(21) Numéro de dépôt: **80400745.8**

(22) Date de dépôt: **28.05.80**

(51) Int. Cl.³: **H 04 B 5/00**

(30) Priorité: **06.06.79 FR 7914440**

(43) Date de publication de la demande:
**07.01.81 Bulletin 81/1**

(84) Etats Contractants Désignés:
**DE GB IT NL SE**

(71) Demandeur: **"THOMSON-CSF"**
**173, Boulevard Haussmann**
**F-75360 Paris Cedex 08(FR)**

(72) Inventeur: **Menant, Christophe**
**"Thomson-CSF"-SCPI 173,bld Haussmann**
**F-75360 Paris Cedex 08(FR)**

(72) Inventeur: **Blanc, Jean-Claude**
**"THOMSON-CSF" - SCPI 173, bld Haussmann**
**F-75360 Paris Cedex 08(FR)**

(74) Mandataire: **Courtellemont, Alain et al,**
**"THOMSON-CSF" - SCPI 173, bld Haussmann**
**F-75360 Paris Cedex 08(FR)**

(54) Système d'interphone pour liaisons par voie hertzienne.

(57) Système d'interphone par voie hertzienne, fonctionnant sans source d'énergie solidaire des postes qu'il comporte.

L'énergie nécessaire au fonctionnement d'un poste émetteur-récepteur (A) est fournie, par voie électromagnétique, par une station (B) comportant un amplificateur de puissance (10) alimentant une antenne à boucle d'induction (11). Pour recevoir l'énergie rayonnée par la station (B) le poste (A) comporte une antenne à boucle d'induction (12) sur laquelle est branché un circuit de redressement et filtrage (13).

EP 0 021 886 A1

1

# SYSTÈME D'INTERPHONE POUR LIAISONS PAR VOIE HERTZIENNE

La présente invention se rapporte à un système d'interphone pour liaisons par voie hertzienne.

Il est connu de réaliser des systèmes d'interphone comportant des postes émetteurs et/ou récepteurs communiquant entre eux par liaisons hertziennes. Dans ces systèmes connus l'alimentation des postes est fournie par une pile ou un accumulateur solidaire du poste. Une telle alimentation présente divers inconvénients : elle est relativement lourde et volumineuse, surtout si une grande autonomie de fonctionnement est désirée, de plus elle doit être changée périodiquement.

La présente invention a pour but d'éviter une partie de ces inconvénients et de réduire les autres. Ceci est obtenu au moyen d'une alimentation des postes à partir d'énergie électromagnétique.

Dans le système d'interphone selon l'invention les postes comportent à cet effet un circuit capteur-alimenteur pour capter de l'énergie électromagnétique et, à partir de l'énergie captée, fournir l'alimentation du poste.

Il est par ailleurs à noter que les circuits capteurs-alimenteurs servant à capter l'énergie électromagnétique sont connus et ont été utilisés, par exemple, dans des appareils d'aide auditive pour sourds, dans des stimulateurs cardiaques et, associés à un capteur et à un émetteur, dans des dispositifs de détection. La présente invention se rapporte, entre autres, à l'application de ces capteurs-alimenteurs à des systèmes d'interphone.

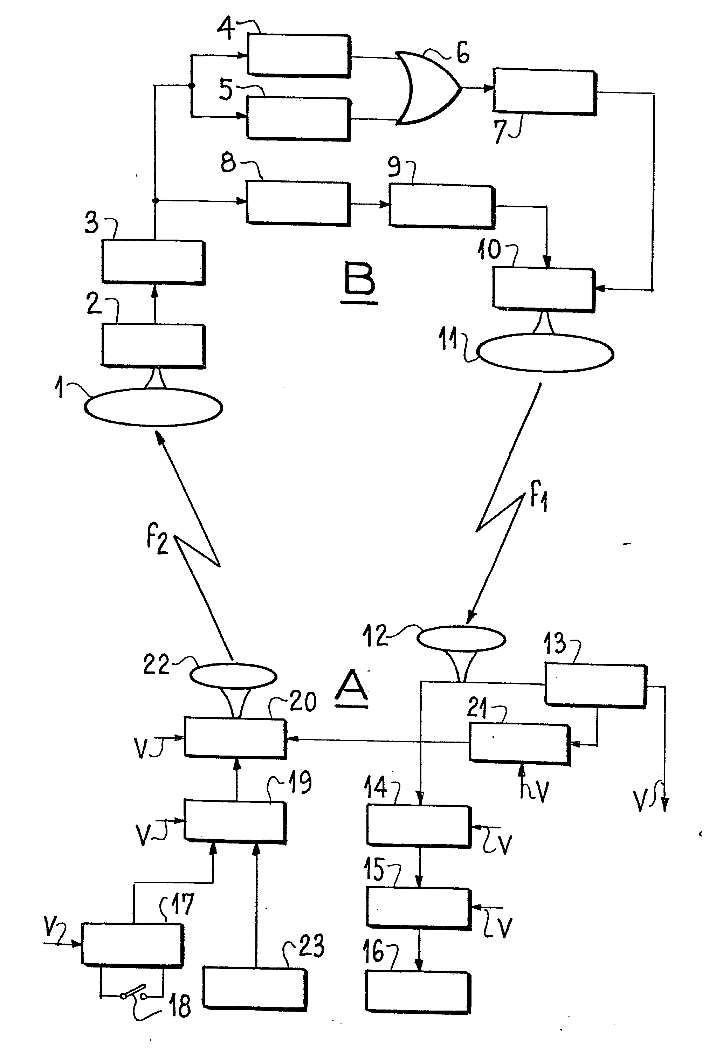

La présente invention sera mieux comprise et d'autres caractéristiques apparaîtront à l'aide de la description ci-après et de l'unique figure s'y rapportant

2

qui est une représentation schématique d'un système d'interphone selon l'invention.

La figure montre un poste selon l'invention, A, et une station, B, destinée, en particulier, à constituer un dispositif d'émission pour rayonner de l'énergie électromagnétique.

La station B comporte un amplificateur de puissance 10 fournissant un signal de sortie à la fréquence $f_1$ ($f_1$ = 200 KHz). Comme il sera vu ci-après le signal fourni par l'amplificateur 10 est en fait un signal modulé, de fréquence porteuse $f_1$. Ce signal est appliqué à une antenne d'émission, à boucle d'induction, 11 ; les termes "antenne à boucle d'induction" ou plus simplement "antenne à boucle" désignent dans cette description et dans les revendications une antenne composée d'une ou plusieurs spires formant un anneau ou une bobine.

Le poste A est un poste émetteur-récepteur destiné à recevoir le signal de fréquence porteuse $f_1$ émis par la station B et comporte à cet effet une antenne de réception, à boucle, 12 ; cette antenne est reliée à l'entrée d'un détecteur de puissance 13 constitué d'un circuit redresseur double alternance suivi d'un circuit de filtrage et de régulation. Le détecteur de puissance fournit une tension V. Cette tension V constitue la tension d'alimentation des différents circuits électroniques composant le poste A.

L'antenne à boucle 12 est également branchée à l'entrée d'un démodulateur 14 qui fournit sur sa sortie le signal modulant le signal $f_1$ reçu ; ce signal modulant est un signal audio-fréquence qui après amplification dans un amplificateur de puissance 15 peut être écouté grâce à un écouteur 16.

3

Le poste A comporte également un microphone électromagnétique 23 et un circuit d'élaboration d'un message, 17, commandé par un interrupteur ouvert en position repos, 18 ; ce message est un message multitons prédéterminé que l'opérateur du poste A envoie, en appuyant sur l'interrupteur 18, juste avant de commencer à parler. Les sorties du microphone et du circuit 17 sont reliées à un circuit, 19, de modulation linéaire d'un signal porteur à fréquence $f_2$ ($f_2$ = 180 KHz) dont le signal de sortie est appliqué à l'entrée d'un amplificateur 20 pour être amplifié puis émis grâce à une antenne à boucle 22. Un circuit, 21, de mesure du niveau de la puissance reçue par le détecteur de puissance 13 permet de commander le niveau du gain de l'amplificateur 20.

La station B est un relais fixe comportant une source d'alimentation non représentée qui, dans le cas de l'exemple décrit, est constituée par le secteur.

En plus de son alimentation, de l'amplificateur 10 et de l'antenne 11, la station B comporte une antenne de réception, à boucle, 1, branchée à l'entrée d'un amplificateur 2 dont le signal de sortie est appliqué à un démodulateur 3.

Quand l'antenne 1 capte un signal à la fréquence $f_2$ modulée, le signal modulant fourni par le démodulateur 3 est appliqué à un amplificateur basse fréquence 8 puis à un circuit de modulation 9 dont la fréquence porteuse est la fréquence $f_1$. La sortie du circuit de modulation 9 est reliée à l'entrée de l'amplificateur 10. Ainsi le signal modulant émis par le poste A sur la fréquence $f_2$ est réémis par la station B sur la fréquence $f_1$, c'est-à-dire avec l'énergie que fournit, par voie électromagnétique, cette station. De ce fait le

4

signal modulant en question peut non seulement être capté par le poste A qui vérifie ainsi que son signal émis a bien été retransmis, mais également par d'autres postes identiques au poste A, à condition toutefois qu'ils se trouvent suffisamment près de la station B; une liaison en duplex peut ainsi s'établir.

La station B comporte un dispositif lui permettant de fonctionner à énergie réduite en période de veille c'est-à-dire tant qu'elle ne sert pas à retransmettre des signaux. Elle comporte à cet effet un décodeur d'appel, 4, et un détecteur de niveau, 5, branchés en parallèle entre la sortie du démodulateur 3 et les deux entrées d'une porte OU, 6; la sortie de cette porte OU est couplée par un circuit monostable 7 à une entrée de commande de niveau de l'amplificateur de puissance, 10. En période de veille le circuit monostable, 7, n'applique aucun signal à l'entrée de commande de l'amplificateur de puissance 10 puisque aussi bien le décodeur d'appel, 4, que le détecteur de niveau, 5, ne reçoivent aucun signal; l'amplificateur de puissance 10 est réglé pour ne fournir qu'une puissance réduite quand le signal sur son entrée de commande a la valeur O. Par contre, quand le décodeur d'appel repère un message multitons d'appel, envoyé par le poste A ou par un poste identique au poste A, un signal est appliqué sur l'entrée de commande de l'amplificateur de puissance 10 qui est réglé pour fournir alors une puissance importante. La durée de l'état quasi-stable du circuit monostable 7 est de 5 secondes, si bien que, dans la mesure où le détecteur de niveau 5 ne repère pas, ensuite, un niveau de réception nul pendant plus de 5 secondes l'amplificateur 5 continue à fonctionner à forte puissance de sortie. Le décodeur d'appel, 4, a

6

l'autre; or, dans ces conditions, il suffit d'un niveau de sortie de l'amplificateur 20 relativement faible pour que le signal reçu par le relais B soit convenable ; par contre si la puissance électromagnétique reçues par le poste B est plus faible, cela veut dire que les conditions de transmission entre le relais B et le poste A sont moins bonnes et, pour que le signal reçu par le relais B soit convenable, il faut alors que le niveau de sortie de l'amplificateur 20 soit plus élevé.

L'invention n'est pas limitée à l'exemple décrit, c'est ainsi que le circuit d'élaboration d'un message d'appel 17 et, de ce fait, le décodeur d'appel 4, peuvent être supprimés. De même les amplificateurs 10 et 20 peuvent être à gain constant. De même le poste A peut être seulement récepteur ou seulement émetteur mais dans ce cas il devra comporter un dispositif de captation d'énergie électromagnétique. De même le relais B peut comporter son propre émetteur-récepteur, ou son propre émetteur, ou son propre récepteur. Et, dans le cas ou les postes A d'un système d'interphone selon l'invention sont tous des postes uniquement émetteurs ou uniquement récepteurs, le relais B selon la figure sera transformé respectivement en un poste récepteur ou en un poste émetteur équipé d'un dispositif d'émission d'énergie électromagnétique; il ne comportera donc plus de dispositif de retransmission, avec changement de fréquence, des ondes reçues.

été mis en parallèle sur le détecteur de niveau, 5, pour permettre de repérer avec une bonne certitude le début d'une liaison à établir. En effet, au moment où une liaison doit être établie, l'énergie fournie au poste A par la station B est relativement faible (l'amplificateur 10 délivre une puissance réduite) si bien que le poste A ne peut envoyer qu'un signal de faible niveau d'énergie que le détecteur de niveau 5 pourra ne pas détecter; par contre le décodeur d'appel, même avec un faible niveau de signal reçu par la station B, pourra repérer le message multitons élaboré par le circuit 17 sous la commande de l'opérateur désirant établir une liaison.

Il est à noter que le poste A comporte, comme la station B, un dispositif de commande du niveau de sortie de son signal d'émission; ce dispositif est constitué par le circuit de mesure, 21, branché entre le détecteur de puissance 13 et une entrée de commande de gain de l'amplificateur 20. Le circuit de mesure 21 mesure le niveau de la puissance reçue par le détecteur de puissance 13; en fait c'est un simple circuit de transposition de tension qui permet une commande continue du gain de l'amplificateur 20. Cette commande de gain se fait, dans la plage de fonctionnement du poste A, de telle sorte que plus la puissance reçue par voie électromagnétique est élevée et plus le signal envoyé par le poste A vers la station B est faible. Ceci permet à la station B de recevoir toujours le même niveau de signal du poste A et des postes identiques au poste A; en effet la réception d'une forte puissance électromagnétique par le poste A correspond à un poste A proche de la station B et à des antennes 11, 12 d'une part, et 1, 22 d'autre part, bien orientées l'une par rapport à

7

REVENDICATIONS

1. Système d'interphone comportant une station (B) et n (n entier positif) postes (A), caractérisé en ce que les postes comportent un circuit capteur-alimenteur (12, 13) pour capter de l'énergie électromagnétique et la transformer, afin de fournir l'énergie électrique nécessaire à leur propre fonctionnement et en ce que la station comporte un dispositif d'émission (8, 9, 10, 11) pour rayonner l'énergie électromagnétique destinée à être captée par les postes.

2. Système d'interphone selon la revendication 1, caractérisé en ce que le dispositif d'émission de la station comporte, couplés en série, un circuit d'émission (8, 9) pour produire un signal alternatif, un amplificateur de puissance (10) et une antenne à boucle d'induction (11).

3. Système d'interphone selon la revendication 2, caractérisé en ce que la station comporte un réémetteur (1, 2, 3, 8, 9, 10, 11) pour recevoir un signal d'information modulant un signal porteur de fréquence $f_2$ et le réémettre sur une fréquence porteuse $f_1$.

4. Système d'interphone selon la revendication 3, caractérisé en ce que le réémetteur comporte un circuit de sortie constitué par le dispositif d'émission et en ce que le signal alternatif produit par le circuit d'émission est un signal à la fréquence $f_1$ modulé par le signal d'information.

5. Système d'interphone selon la revendication 3, caractérisé en ce que la station comporte un circuit de détection (4, 5, 6, 7) pour détecter le signal d'information et en ce que l'amplificateur de puissance (10) comporte une entrée de commande de puissance à laquelle est couplée la sortie du circuit de détection pour donner

8

à la puissance de sortie de l'amplificateur de puissance une valeur plus faible en l'absence de signal d'information que lorsqu'un signal d'information a été détecté depuis un temps inférieur à une durée d donnée.

6. Poste pour système d'interphone selon la revendication 1, caractérisé en ce que le circuit capteur-alimenteur comporte une antenne à boucle d'induction (12) suivie d'un circuit de redressement et de filtrage (13).

7. Poste selon la revendication 6, comportant en outre au moins un dispositif d'émission ayant un amplificateur (20) à la sortie duquel est branchée une antenne (22), caractérisé en ce que l'amplificateur est un amplificateur à gain variable et en ce qu'il comporte un circuit de mesure (21) du niveau de l'énergie reçue par le circuit capteur-alimenteur, ce circuit de mesure ayant une sortie couplée à l'entrée de commande de gain de l'amplificateur.

# RAPPORT DE RECHERCHE EUROPEENNE

**Office européen des brevets**

0021886

Numéro de la demande

EP 80 40 0745

## DOCUMENTS CONSIDERES COMME PERTINENTS

| Catégorie | Citation du document avec indication, en cas de besoin, des parties pertinentes | Revendication concernée |
|---|---|---|
| | <u>GB - A - 1 543 715</u> (UNITED KINGDOM ATOMIC ENERGY AUTHORITY) <br> * Page 1, lignes 52-67; lignes 76-83 * | 1,6 |
| | <u>FR - A - 2 128 610</u> (HOEK) <br> * Page 1, lignes 1-6; page 2, lignes 5-26; page 4, ligne 31 - page 5, ligne 2 * | 2,3,5 |
| | <u>US - A - 3 426 278</u> (VAN DER VALK) <br> * Colonne 1, lignes 53-68; colonne 3, lignes 3-20; lignes 62-75; colonne 4, lignes 11-17 * | 2-4 |
| | <u>FR - A - 2 275 077</u> (CIT-ALCATEL) <br> * Page 1, lignes 27-33; page 2, lignes 15-27 * | 7 |
| A | <u>US - A - 3 209 081</u> (DUCOTE et al.) <br> * Colonne 1, lignes 41-50; colonne 2, ligne 48 à colonne 3, ligne 11 * | 1,6 |
| P | <u>FR - A - 2 431 227</u> (ELECTRONIQUE MARCEL DASSAULT) <br> * Page 2, ligne 20 à page 3, ligne 38 * | 1 |

**CLASSEMENT DE LA DEMANDE (Int. Cl. 3)**

H 04 B 5/00

**DOMAINES TECHNIQUES RECHERCHES (Int. Cl. 3)**

H 04 B   5/00 <br>          5/02 <br>          7/005 <br>          5/06

**CATEGORIE DES DOCUMENTS CITES**

X: particulièrement pertinent <br>
A: arrière-plan technologique <br>
O: divulgation non-écrite <br>
P: document intercalaire <br>
T: théorie ou principe à la base de l'invention <br>
E: demande faisant interférence <br>
D: document cité dans la demande <br>
L: document cité pour d'autres raisons <br>
&: membre de la même famille, document correspondant

Le présent rapport de recherche a été établi pour toutes les revendications

| Lieu de la recherche | Date d'achèvement de la recherche | Examinateur |
|---|---|---|
| La Haye | 05-09-1980 | HOLPER |

OEB Form 1503.1   06.78